# EUROPEAN PATENT APPLICATION

(11) **EP 3 885 633 A1**
(43) Date of publication of application: **29.09.2021**
(21) Application number: 19886968.7
(22) Date of filing: 13.11.2019
(51) Int. Cl.: F16M 13/04

(54) **SELFIE DEVICE**

(30) Priority: 19.11.2018 CN 201811377518
(71) Applicant: Winners' Sun Plastic & Electronic (Shenzhen) Co., Ltd., Shenzhen Guangdong 518000 (CN)
(72) Inventor: SHAN, Jinghua, Shenzhen, Guangdong 518000 (CN); PENG, Yi Bing, Shenzhen, Guangdong 518000 (CN)
(74) Representative: Li, Xiaolu
(86) International application number: PCT/CN2019/118221
(87) International publication number: WO 2020/103749

(57) **Abstract**

The present disclosure provides a selfie device, including a telescopic rod, a longitudinal handle sleeved on the telescopic rod, and a clamping device rotatably connected to a top end of the telescopic rod. The clamping device includes a vertical arm, at least one base having a bearing function and disposed on a lower end of the vertical arm, a connection head connected to the at least one base and configured to be rotatably connected with the telescopic rod, and two transverse clamping arms respectively and rotatably disposed on two sides of the vertical arm and configured to transversely clam. And at least one of the two transverse clamping arms is stretchable. The transverse clamping arms are respectively and rotatably disposed on two sides of the vertical arm and configured to transversely clamp, and least one of the two transverse clamping arms is stretchable.

## Description

### TECHNICAL FIELD

The present disclosure relates to a technical field of photographing support equipment, in particular to a selfie device.

### BACKGROUND

A selfie device is a clamping device to clamp photography equipment. Present clamping devices are mainly divided into upper and lower stretchable clamping devices and transverse clamping devices. There is a problem for the upper and lower stretchable clamping devices where clamping is unstable when a clamping object is large in size when doing upper and lower stretchable clamping. And there is also a problem for the traverse clamping devices that a size of the traverse clamping devices is relatively large and is not easy to be stored and carried. Meanwhile, an existing hand-held photographing stabilizer adopting the Steiner principle is complex in structure, large in size, inconvenient to carry, high in cost, poor in stability, and unable to meet higher picture stability requirements.

### SUMMARY

In view of the shortcomings, an object of the present disclosure is to provide a selfie device to solve problems that a size of a transverse clamping device of present selfie devices is relatively large and is not easy to be stored and carried and present hand-held selfie devices are complex in structures and has poor stability.

A technical scheme of the present disclosure is as follows.

The present disclosure provides a selfie device, including a telescopic rod, a longitudinal handle sleeved on the telescopic rod, and a clamping device rotatably connected to a top end of the telescopic rod. The clamping device includes a vertical arm, at least one base having a bearing function and disposed on a lower end of the vertical arm, a connection head connected to the at least one base and configured to be rotatably connected with the telescopic rod, and two transverse clamping arms respectively and rotatably disposed on two sides of the vertical arm and configured to transversely clam. And at least one of the two transverse clamping arms is stretchable.

Furthermore, the two transverse clamping arms are synchronously unfolded and folded through a linkage mechanism in synchronous reverse rotation.

Furthermore, the linkage mechanism includes two rotating components. The two rotating components are respectively and fixedly connected to the two transverse clamping arms and are engaged with each other
Furthermore, the two rotating components are gears rotatably disposed on the vertical arm and engaged with each other.

Furthermore, the traverse clamping arms are rotatably disposed on the vertical arm through the gears.

Furthermore, the two rotating components are a gear and a chain ring. The gear and the chain ring are rotatably disposed on the vertical arm and engaged with each other.

Furthermore, both of the transverse clamping arms are stretchable and symmetrically disposed.

Furthermore, the each of the two transverse clamping arms includes a respective handle swing arm rotatably disposed on the vertical arm, a respective clamping head, a respective pull rod, and a respective first elastic component. One end of the respective pull rod is slidably disposed in the respective handle swing arm, an other end of the respective pull rod is fixedly connected to the respective clamping head. The respective first elastic component is disposed in the respective handle swing arm, one end of the respective first elastic component is connected to the respective pull rod, an other end of the respective first elastic component is connected to the respective handle swing arm, and the respective first elastic component is configured to provide stretchable elastic force for the respective pull rod.

Furthermore, a respective anti-rotation structure configured to prevent the respective pull rod from rotating is disposed on each of the two transverse clamping arms.

Furthermore, the respective anti-rotation structure includes a respective guide component fixedly disposed on the respective pull rod in the respective handle swing arm.

Furthermore, the respective handle swing arm includes a respective transverse sliding groove. The one end of the respective pull rod is slidably disposed in the respective transverse sliding groove, and the respective guide component is a non-circular guide piece fixedly connected to the respective pull rod and is slidably matched with the respective transverse sliding groove.

Furthermore, receiving grooves are disposed on the vertical arm, and the receiving grooves are configured to receive each of the two transverse clamping arms when each of the two transverse clamping arms is folded.

Furthermore, notches are disposed on side walls of the receiving grooves, the notches are configured to facilitate to unfold the two transverse clamping arms.

Furthermore, a decorative cover is further disposed on the vertical arm, and the decorative cover is configured to shield and hide a rotating shaft end of each of the two transverse clamping arms.

Furthermore, a respective first anti-sliding groove is disposed on the at least one base, and a respective second anti-sliding groove is disposed in an inner side of the respective clamping head.

Furthermore, the selfie device further includes a hand-held anti-shake stabilizing device. The hand-held anti-shake stabilizing device is disposed between the telescopic rod and the clamping device.

Furthermore, the hand-held anti-shake stabilizing device includes a bracket, a transverse balance component, an upper support, and a lower support. An upper adapter part is disposed on a top of the bracket, and a lower adapter part is disposed at a bottom of the bracket. The transverse balance component includes a receiving member located in the bracket and an adapter rod connected with the receiving member and extending out of the bracket, a first groove having a smooth curved inner wall is disposed on an upper part of the receiving member, and a second groove is disposed on a lower part of the receiving member. The upper support is disposed on a top portion inside the bracket, a lower end of the upper support is spherical and is configured to abut against the first groove and is matched with an inner wall of the first groove. The lower support is disposed on a bottom portion inside the bracket, an elastic tapered protrusion, configured to abut against a bottom of the second groove, is disposed on a top end of the lower support. The clamping device is disposed on an upper part of the upper adapter part, and the telescopic rod is disposed at a lower part of the lower adapter part.

Furthermore, the upper support includes an installation base configured to be installed on the bracket and an upper ejector rod fixedly disposed on the installation base. A lower end of the upper ejector rod is a spherical surface.

Furthermore, the lower support includes an elastic lower ejector cap disposed at a lower portion inside the bracket and having the elastic tapered protrusion and further includes a lower ejector rod configured to eject the elastic tapered protrusion to abut against the second groove from a lower end of the elastic lower ejector cap.

Furthermore, a third groove is disposed on an upper part of the elastic lower ejector cap, and the third groove is matched with the lower part of the receiving member and is configured to limit an inclination degree of the receiving member.

Furthermore, a blind hole is disposed on the lower end of the elastic lower ejector cap. The lower ejector rod is matched with the blind hole and is disposed in the blind hole in a penetrating mode, and the lower ejector rod abuts the elastic tapered protrusion against the second groove.

Furthermore, the selfie device includes a transverse handle. The transverse handle is hinged to one end of the adapter rod.

Furthermore, an elastic self-locking structure is disposed between the adapter rod and the transverse handle, and the elastic self-locking structure is configured to automatically lock and fix the transverse handle when the transverse handle is unfolded or folded.

Furthermore, the elastic self-locking structure includes an accommodation groove, an ejector rod, a second elastic component, and a plurality of limiting grooves. The accommodation groove is disposed on a hinged end of the transverse handle. The ejector rod is disposed inside the accommodation groove, and one end of the ejector rod extended out of the accommodation groove. The second elastic component abuts against the ejector rod and is configured to provide elastic force. The plurality of the limiting grooves are disposed on a hinged end of the adapter rod and are configured to match with the ejector rod.

Furthermore, a number of the plurality of the limiting grooves is two, and the two limiting grooves are respectively disposed on a front end and a lower end of the hinged end of the adapter rod.

Furthermore, the selfie device includes a remote controller. The remote controller is detachably disposed on the transverse handle.

Furthermore, the remote controller is self-locked on the transverse handle through a first magnetic attraction assembly. The first magnetic attraction assembly is disposed on the remote controller and the transverse handle.

Furthermore, the first magnetic attraction assembly includes a first magnet disposed inside the transverse handle and a second magnet disposed inside the remote controller.

Furthermore, when the transverse handle is folded, the transverse handle is self-locked on the longitudinal handle through a second magnetic attraction assembly, and the second magnetic attraction assembly is disposed in the transverse handle and the longitudinal handle.

Furthermore, the second magnetic attraction assembly includes a third magnet disposed inside the longitudinal handle and a fourth magnet disposed inside the transverse handle.

Furthermore, the longitudinal handle is in a hollow structure. The longitudinal handle includes a connection part and a cylindrical handle main body. The cylindrical handle main body is divided into a plurality of arc-shaped handle parts. A handle main body connection component is fixedly disposed on one end of the connection part, and the arc-shaped handle parts are hinged to the handle main body connection component.

Furthermore, the third magnet is disposed inside the connection part.

Beneficial effects of the present disclosure are as following.

The present disclosure provides the clamping device of the selfie device, the transverse clamping arms are respectively and rotatably disposed on two sides of the vertical arm and configured to transversely clamp, and least one of the two transverse clamping arms is stretchable. When using the selfie device, the two transverse clamping arms are respectively rotated to an unfolded state, thereby clamping objects, after using, the two transverse clamping arms are rotated to a folded state, thereby greatly reducing a transverse side of two sides of the selfie device, which is convenient to store and carry.

The present disclosure further provides the hand-held anti-shake stabilizing device, the hand-held anti-shake stabilizing device abuts against the first groove having the smooth curved inner wall and disposed on the upper part of the receiving member through the upper support and synchronously abuts against the second groove disposed on the lower part of the receiving member through the elastic tapered protrusion disposed on the top end of the lower support, which efficiently adjusts balance stability and improves stability performance. Moreover, a structure of the hand-held anti-shake stabilizing device is simple and a size is small, which is convenient to carry and has a low cost.

### BRIEF DESCRIPTION OF DRAWINGS

FIG. 1 is a structural schematic diagram of a clamping device being in an unfolded state according to one embodiment of the present disclosure.
FIG. 2 is a structural schematic diagram of the clamping device being in a folded state according to one embodiment of the present disclosure.
FIG. 3 is a partial cross-sectional schematic diagram of each of transverse clamping arms according to one embodiment of the present disclosure.
FIG. 4 is a partial exploded schematic diagram of each of the transverse clamping arms according to one embodiment of the present disclosure.
FIG. 5 is a structural schematic diagram of a hand-held anti-shake stabilizing device according to one embodiment of the present disclosure.
FIG. 6 is a cross-sectional structural schematic diagram of the hand-held anti-shake stabilizing device according to one embodiment of the present disclosure.
FIG. 7 is a structural schematic diagram of a bracket according to one embodiment of the present disclosure.
FIG. 8 is a structural schematic diagram of an upper support according to one embodiment of the present disclosure.
FIG. 9 is a structural schematic diagram of a transverse balance component according to one embodiment of the present disclosure.
FIG. 10 is a structural schematic diagram of the transverse balance component shown in an other angle according to one embodiment of the present disclosure.
FIG. 11 is a structural schematic diagram of a lower support according to one embodiment of the present disclosure.
FIG. 12 is a structural schematic diagram of a selfie device being in a use state according to one embodiment of the present disclosure.
FIG. 13 is a partial cross-sectional schematic diagram of the selfie device being in the use state according to one embodiment of the present disclosure.
FIG. 14 is a structural schematic diagram of the selfie device being in a folded state according to one embodiment of the present disclosure.
FIG. 15 is a schematic diagram of the selfie device being another use state according to one embodiment of the present disclosure.
FIG. 16 is a schematic diagram of the selfie device being another use state according to one embodiment of the present disclosure.

### DETAILED DESCRIPTION

The present disclosure provides a selfie device, and in order to make purpose, technical solution and effect of the present disclosure clearer and more definite, the present disclosure is described in further detail hereinafter with reference to the accompanying drawings and by way of examples. It should be understood that the specific embodiments described herein are used only to explain the present disclosure and are not intended to limit the present disclosure.

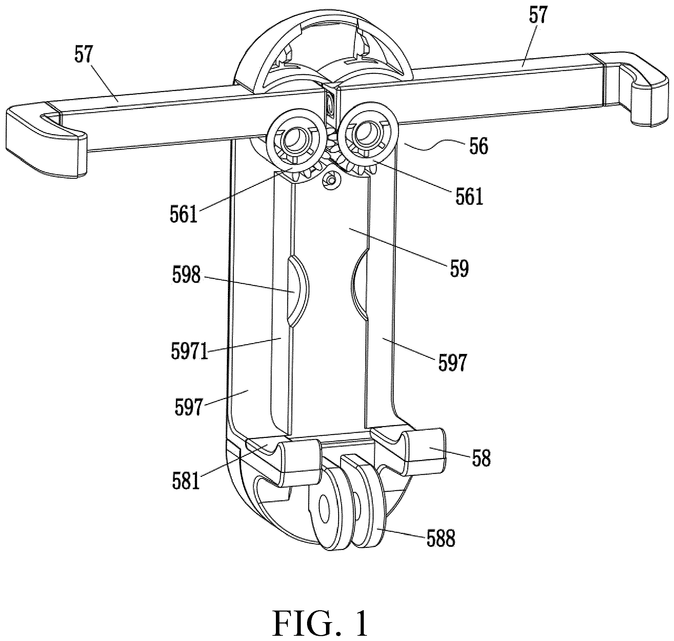

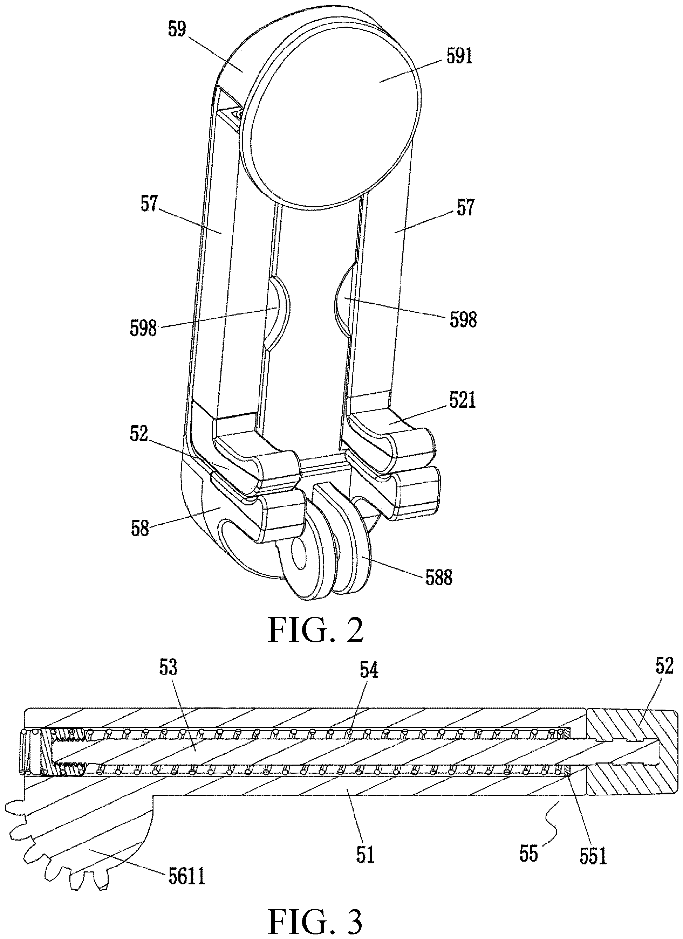

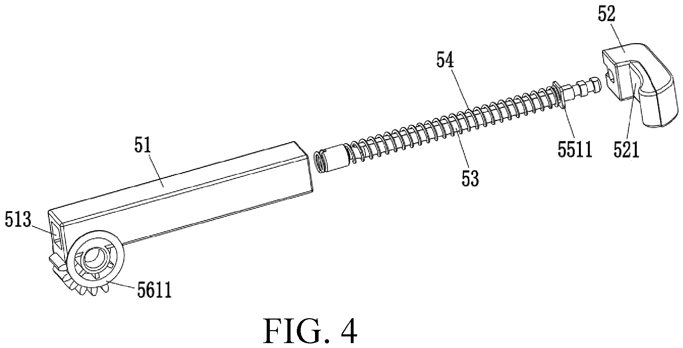

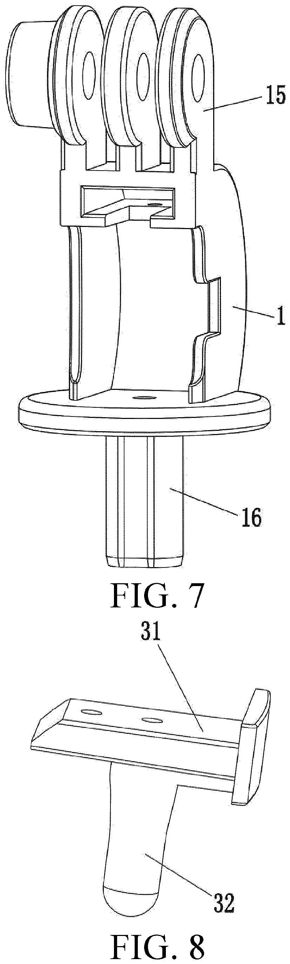

The present disclosure provides a selfie device, as shown in FIGS. 1-4 and 8, including a telescopic rod 8, a longitudinal handle 6 (large handle) sleeved on the telescopic rod 8, and a clamping device 5 rotatably connected to a top end of the telescopic rod 8. The clamping device 5 includes a vertical arm 59, at least one base 58 having a bearing function (such as bearing a lower end of a phone) and disposed on a lower end of the vertical arm 59, a connection head 588 connected to the at least one base 58 and configured to be rotatably connected with the telescopic rod 8, and two transverse clamping arms 57 respectively and rotatably disposed on two sides of the vertical arm 59 and configured to transversely clamp (such as clamping two side of the phone). And at least one of the two transverse clamping arms 57 is stretchable. It should be understood that only setting one of the transverse clamping arms to be stretchable may achieve an effect transversely stretching and clamping a mobile phone and the like, certainly and optionally, setting both of the transverse clamping arms to be stretchable may maintain the balance and stability of clamping.

The present disclosure provides the clamping device of the selfie device, the transverse clamping arms are respectively and rotatably disposed on two sides of the vertical arm and configured to transversely clamp, and least one of the two transverse clamping arms is stretchable. When using the selfie device, the two transverse clamping arms are respectively rotated to an unfolded state, thereby clamping objects, after using, the two transverse clamping arms are rotated to a folded state, thereby greatly reducing a transverse side of two sides of the selfie device, which is convenient to store and carry.

Further, as shown in FIGS. 1-4, in one embodiment, the two transverse clamping arms 57 are synchronously unfolded and folded through a linkage mechanism 56 in synchronous reverse rotation. Arrangement of the linkage mechanism 56 enables the transverse clamping arms 57 to rotate as long as one is unfolded and an other rotates with the angle, being folded back also the same. Moreover, the linkage mechanism 56 includes two rotating components 561. The two rotating components 561 are respectively and fixedly connected to the two transverse clamping arms 57 and are engaged with each other. The rotating components 561 may take a variety of forms and only needs to meet conditions of mutual engagement, for example, the two rotating components may be a gear and a chain ring rotatably disposed on the vertical arms 59 and engaged with each other. Optionally, the two rotating components 561 are gears 5611 rotatably disposed on the vertical arm 59 and engaged with each other. The gears 5611 are preferably half gears, thus the gears are meshed more stably. Optionally, the traverse clamping arms 57 are rotatably disposed on the vertical arm 59 through the gears 5611.

Further, as shown in FIGS. 1-4, in one embodiment, both of the transverse clamping arms 57 are stretchable and symmetrically disposed. Specifically, the each of the two transverse clamping arms 57 includes a respective handle swing arm 51 rotatably disposed on the vertical arm 59, a respective clamping head (a pull hand) 52, a respective pull rod 53, and a respective first elastic component 54. One end of the respective pull rod 53 is slidably disposed in the respective handle swing arm 51, an other end of the respective pull rod 53 is fixedly connected to the respective clamping head 52. The respective first elastic component 54 is disposed in the respective handle swing arm 51, one end of the respective first elastic component 54 is connected to the respective pull rod 53, an other end of the respective first elastic component 54 is connected to the respective handle swing arm 51, and the respective first elastic component 54 is configured to provide stretchable elastic force for the respective pull rod 53. The first elastic component 54 is preferably a spring. Optionally, a respective anti-rotation structure 55 configured to prevent the respective pull rod 53 from rotating is disposed on each of the two transverse clamping arms 57. The anti-rotation structure 55 may prevent 360-degree rotation of the pull handle after the pull handle being pulled. The anti-rotation structure 55 take various forms, for example, by arranging a pin shaft on a rotating shaft to avoid axial rotation and the like. In one embodiment, the respective anti-rotation structure 55 includes a respective guide component 551 fixedly disposed on the respective pull rod 53 in the respective handle swing arm 51. Optionally, the respective handle swing arm 51 includes a respective transverse sliding groove 513. The one end of the respective pull rod 53 is slidably disposed in the respective transverse sliding groove 513, and the respective guide component 551 is a non-circular guide piece 5511 fixedly connected to the respective pull rod 53 and is slidably matched with the respective transverse sliding groove 513. The respective guide component 551 may be a polygonal guide component, or the like, is preferably a square guide component.

Further, as shown in FIGS. 1-2, in one embodiment, receiving grooves 597 are disposed on the vertical arm 59, and the receiving grooves 597 are configured to receive each of the two transverse clamping arms 57 when each of the two transverse clamping arms 57 is folded. The receiving grooves 597 are configured to shield and hide the transverse clamping arms 57, thereby reducing a transverse size and volume. Optionally, notches 598 are disposed on side walls 5971 of the receiving grooves 597, the notches 598 are configured to facilitate to unfold the two transverse clamping arms 57. Optionally, a decorative cover 591 is further disposed on the vertical arm 59, and the decorative cover 591 is configured to shield and hide a rotating shaft end of each of the two transverse clamping arms 57, and the decorative cover 591 helps to form a regular and attractive appearance. As shown in FIGS. 1, 2, and 4, a respective first anti-sliding groove 581 is disposed on the at least one base 58, and a respective second anti-sliding groove 521 is disposed in an inner side of the respective clamping head 52, the anti-sliding grooves are configured to fixedly clamp the objects (such as mobile phones).

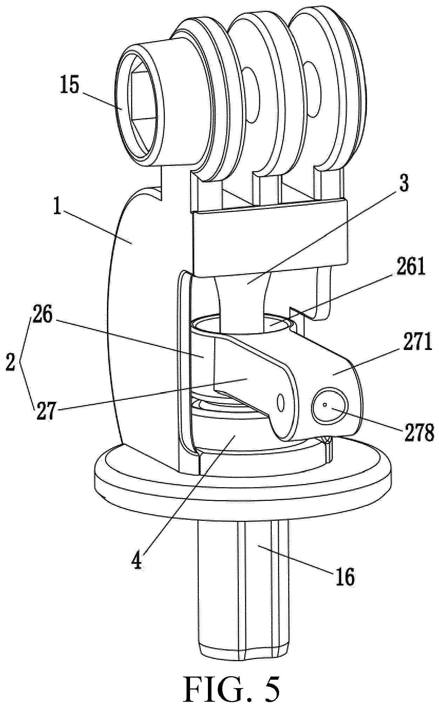

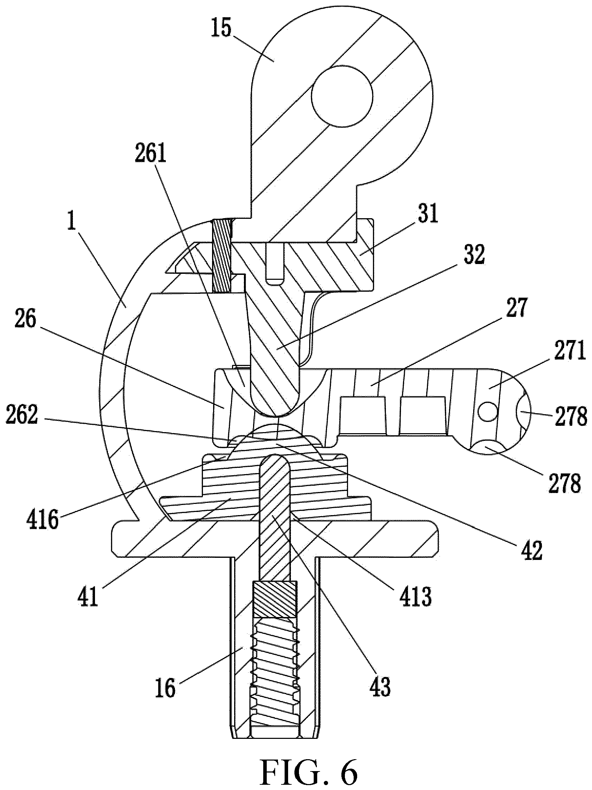

Further, as shown in FIGS. 5-6, in one embodiment, the selfie device further includes a hand-held anti-shake stabilizing device 9. The hand-held anti-shake stabilizing device 9 is disposed between the telescopic rod 8 and the clamping device 5. Optionally, a length of the longitudinal handle 6 may be adjusted to assist the hand-held anti-shake stabilizing device 9 through the telescopic rod 8, a balance is further controlled to be stable, so that the clamping device 5 of the selfie device may clamp different mobile phones. Specifically, the hand-held anti-shake stabilizing device 9 includes a bracket 1, a transverse balance component 2, an upper support 3, and a lower support 4. At least one side of the bracket 1 is in an open shape, a movable space is formed in a middle of the bracket 1. An upper adapter part 15 is disposed on a top of the bracket 1, and a lower adapter part 16 is disposed at a bottom of the bracket 1. The transverse balance component 2 includes a receiving member 26 located in the bracket 1 and an adapter rod 27 connected with the receiving member 26 and extending out of the bracket 1, a first groove 261 having a smooth curved inner wall is disposed on an upper part of the receiving member 26, and a second groove 262 is disposed on a lower part of the receiving member 26. The upper support 3 is disposed on a top portion inside the bracket 1, a lower end of the upper support 3 is spherical and is configured to abut against the first groove 261 and is matched with an inner wall 2611 of the first groove 261. The lower support 4 is disposed on a bottom portion inside the bracket 1, an elastic tapered protrusion 42, configured to abut against a bottom 2621 of the second groove 262, is disposed on a top end of the lower support 4. The clamping device 5 is disposed on an upper part of the upper adapter part 15, and the telescopic rod 8 is disposed at a lower part of the lower adapter part 16.

The present disclosure provides the hand-held anti-shake stabilizing device, adopting the Steiner principle, the hand-held anti-shake stabilizing device abuts against the first groove having the smooth curved inner wall and disposed on the upper part of the receiving member through the upper support and synchronously abuts against the second groove disposed on the lower part of the receiving member through the elastic tapered protrusion disposed on the top end of the lower support, which efficiently adjusts balance stability and improves stability performance. Moreover, a structure of the hand-held anti-shake stabilizing device is simple and a size is small, which is convenient to carry and has a low cost.

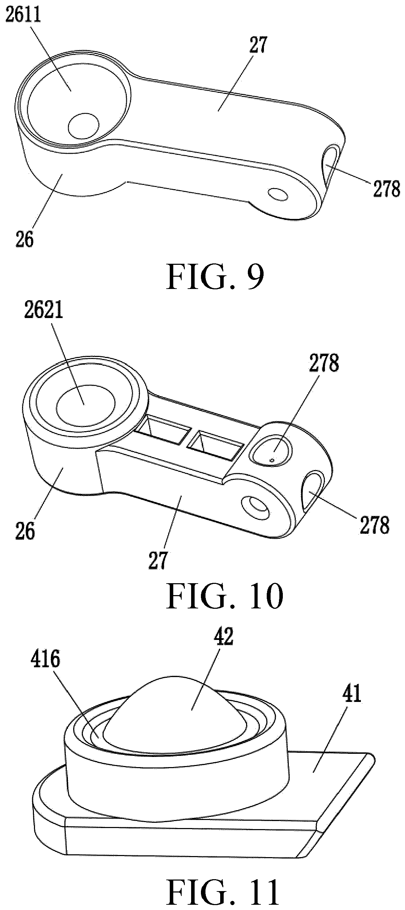

Further, as shown in FIGS. 5-11, in one embodiment, the upper support 3 includes an installation base 31 configured to be installed on the bracket 1 and an upper ejector rod 32 fixedly disposed on the installation base 31. A lower end of the upper ejector rod 32 is a spherical surface. The lower support 4 includes an elastic lower ejector cap 41 disposed at a lower portion inside the bracket 1 and having the elastic tapered protrusion 42 and further includes a lower ejector rod 43 configured to eject the elastic tapered protrusion 42 to abut against the second groove 262 from a lower end of the elastic lower ejector cap 41. Specifically, a blind hole 413 is disposed on the lower end of the elastic lower ejector cap 41. The lower ejector rod 43 is matched with the blind hole 413 and is disposed in the blind hole 413 in a penetrating mode, and the lower ejector rod 43 abuts the elastic tapered protrusion 42 against the second groove 262. A top end of the blind hole 413 and the top end of the lower ejector rod 43 are preferably spherical. Optionally, a third groove 416 is disposed on an upper part of the elastic lower ejector cap 41, and the third groove 416 is matched with the lower part of the receiving member and is configured to limit an inclination degree of the receiving member 26, the third groove 416 is preferably a cylindrical groove.

It should be noted that the spherical surface as referred to in the present disclosure includes, but is not limited to, a spherical surface in a strict geometric sense, also including a surface shape proximate to or similar to the spherical surface.

Further, in one embodiment, the inner wall of the first groove 261 is preferably a parabola-shaped smooth curved surface, so that swinging of the upper support 3 is effectively prevented, thus, the lower end of the upper support 3 is controlled to swing in a small angle range in the first groove 261, for example, within 20 -30 degrees, and which is beneficial to adjust balance. A surface of the elastic tapered protrusion 42 is preferably a smooth arc curved surface, for example, the elastic tapered protrusion 42 is a conical protrusion or a hill-shaped protrusion, the second groove 262 is preferably a cylindrical groove, which is beneficial to control the elastic tapered protrusion 42 to be centrally disposed, and offset is prevented. The receiving member 26 is preferably a hard plastic, such as engineering plastic, racing steel and the like. the elastic lower ejector cap 41 is preferably made of a silica gel material, so that when the elastic tapered protrusion 42 is matched and rotated in the second groove 262, a good buffering effect can be achieved, so that rotating stability is better.

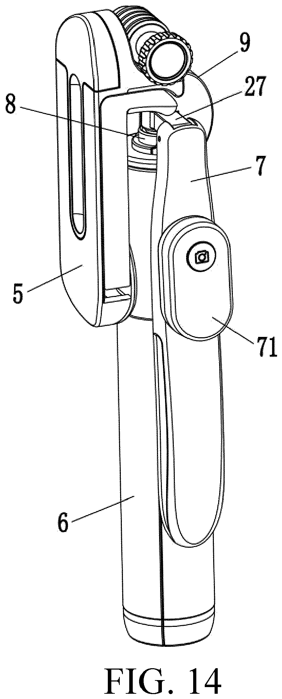

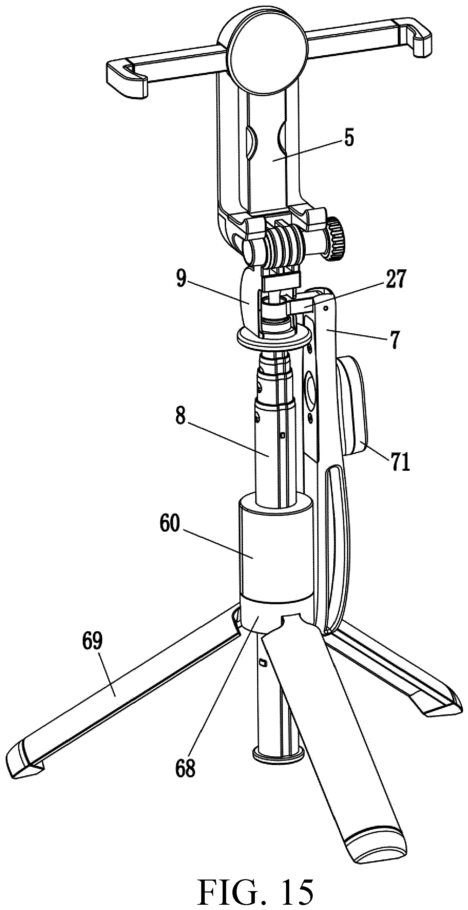

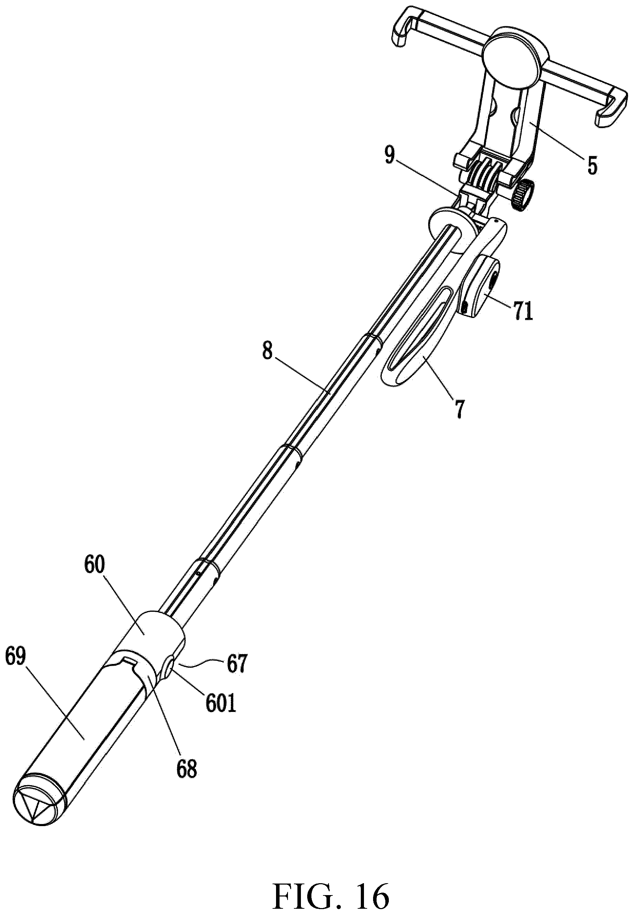

Further, it should be understood that, as long as a design of the adapter rod 27 is long enough, the adapter rod 27 alone can achieve an effect of hand-held anti-shake balance stabilization. Certainly, and optionally, as shown in FIGS. 5-6,9-10, and 12-16, in one embodiment, the selfie device further includes a transverse handle 7 (small handle). The transverse handle 7 is hinged to one end of the adapter rod 27. So that the adapter rod 27 can be designed to be short enough. When using, the transverse handle 7 is unfolded to increase a length of transverse hand grip, and when storing, the transverse handle 7 is folded onto the longitudinal handle 6, so that a size of the selfie device is reduced, which is convenient to stor2 and carry. Optionally, an elastic self-locking structure 79 is disposed between the adapter rod 27 and the transverse handle 7, and the elastic self-locking structure 79 is configured to automatically lock and fix the transverse handle 7 when the transverse handle 7 is unfolded or folded. Specifically, the elastic self-locking structure 79 includes an accommodation groove 77, an ejector rod 76, a second elastic component 75 (preferably a spring), and a plurality of limiting grooves 278. The accommodation groove 77 is disposed on a hinged end 70 of the transverse handle 7. The ejector rod 76 is disposed inside the accommodation groove 77, and one end of the ejector rod 76 extended out of the accommodation groove 77. The second elastic component 75 abuts against the ejector rod 76 and is configured to provide elastic force. The plurality of the limiting grooves 278 are disposed on a hinged end 271 of the adapter rod 27 and are configured to match with the ejector rod 76. Optionally, the number of the plurality of the limiting grooves 278 is two, and the two limiting grooves 278 are respectively disposed on a front end and a lower end of the hinged end 271 of the adapter rod 27.

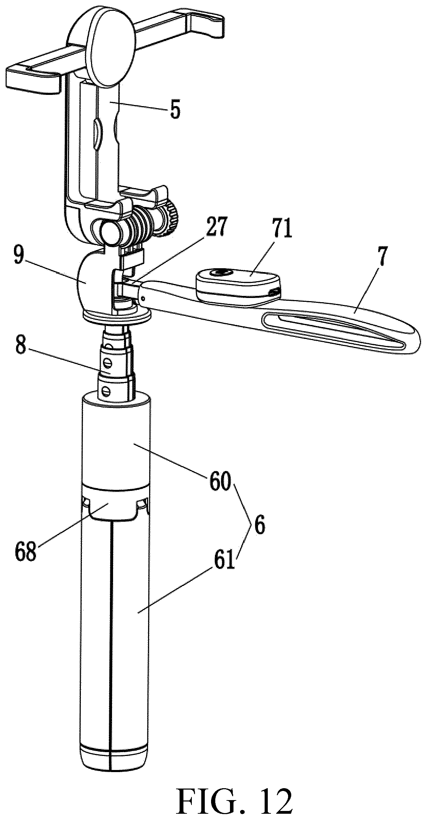

Further, as shown in FIGS. 12-16, in one embodiment, the selfie device includes a remote controller 71. The remote controller 71 is detachably disposed on the transverse handle 7. Optionally, the remote controller 71 is self-locked on the transverse handle 7 through a first magnetic attraction assembly 72. The first magnetic attraction assembly 72 is disposed on the remote controller 71 and the transverse handle 7. Remote controller magnet self-locking and the magnetic attraction assembly may take a variety of different forms, for example, the magnetic attraction assembly may respectively employ a combination of magnets with iron, cobalt, or nickel metal. Certainly, and optionally, the first magnetic attraction assembly 72 includes a first magnet 701 disposed inside the transverse handle 7 and a second magnet 711 disposed inside the remote controller 71. Thus, the small handle folding and self-locking is achieved, and the remote controller, the small handle and the large handle are magnetically attracted and fixed with each other. Optionally, the second magnetic attraction assembly 67 includes a third magnet 601 disposed inside the longitudinal handle 6 and a fourth magnet 702 disposed inside the transverse handle 7.

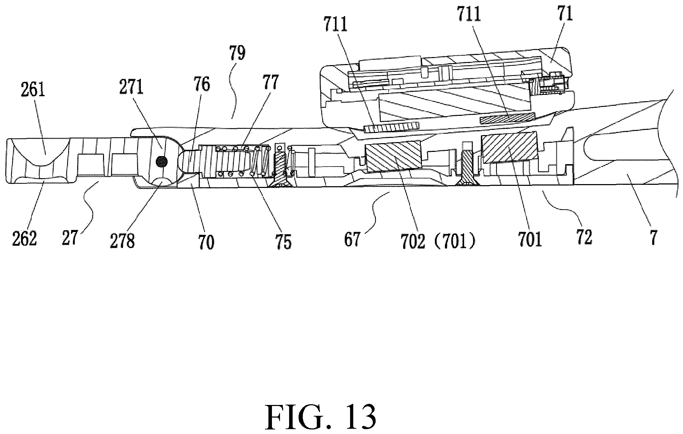

Further, as shown in FIGS. 12-16, in one embodiment, when the transverse handle 7 is folded, the transverse handle 7 is self-locked on the longitudinal handle 6 through a second magnetic attraction assembly 67, and the second magnetic attraction assembly 67 is disposed in the transverse handle 7 and the longitudinal handle 6. It should be understood the first magnetic attraction assembly 72 and the second magnetic attraction assembly 67 may share parts of assembly, simply by setting the share parts in relative positions to be able to achieve an adsorption effect. For example, referring to FIG. 13, the fourth magnet 702 and the first magnet 701 are shared.

Further, as shown in FIGS. 12 and 14-16, in one embodiment, the longitudinal handle 6 is in a hollow structure. The longitudinal handle 6 includes a connection part 60 and a cylindrical handle main body 61. The cylindrical handle main body 61 is divided into a plurality of arc-shaped handle parts 69. A handle main body connection component 68 is fixedly disposed on one end of the connection part 60, and the arc-shaped handle parts 69 are hinged to the handle main body connection component 68. Optionally, the third magnet 601 is disposed inside the connection part 60. The cylindrical handle main body 61 and the connection part 60 are in a hollow structure.

It should be understood that applications of the present disclosure is not limited to the above examples, but can be improved or transformed according to the above description to those who skilled in the art, and all such improvements and transformations shall fall within scopes of protection of the claims of the present disclosure.

## Claims

1. A selfie device, comprising:
a telescopic rod;
a longitudinal handle, sleeved on the telescopic rod; and
a clamping device, rotatably connected to a top end of the telescopic rod;
wherein the clamping device comprises:
a vertical arm;
at least one base, having a bearing function, disposed on a lower end of the vertical arm;
a connection head, connected to the at least one base and configured to be rotatably connected with the telescopic rod; and
two transverse clamping arms, respectively and rotatably disposed on two sides of the vertical arm and configured to transversely clamp;
wherein at least one of the two transverse clamping arms is stretchable.

2. The selfie device according to claim 1, wherein the two transverse clamping arms are synchronously unfolded and folded through a linkage mechanism in synchronous reverse rotation.

3. The selfie device according to claim 2, wherein the linkage mechanism comprises two rotating components; the two rotating components are respectively and fixedly connected to the two transverse clamping arms and are engaged with each other.

4. The selfie device according to claim 3, wherein the two rotating components are gears rotatably disposed on the vertical arm and engaged with each other.

5. The selfie device according to claim 4, wherein the traverse clamping arms are rotatably disposed on the vertical arm through the gears.

6. The selfie device according to claim 3, wherein the two rotating components are a gear and a chain ring; the gear and the chain ring are rotatably disposed on the vertical arm and engaged with each other.

7. The selfie device according to claim 1, wherein both of the transverse clamping arms are stretchable and symmetrically disposed.

8. The selfie device according to claim 7, wherein each of the two transverse clamping arms comprises:
a respective handle swing arm;
a respective clamping head;
a respective pull rod; and
a respective first elastic component;
wherein the respective handle swing arm is rotatably disposed on the vertical arm; one end of the respective pull rod is slidably disposed in the respective handle swing arm, an other end of the respective pull rod is fixedly connected to the respective clamping head; the respective first elastic component is disposed in the respective handle swing arm, one end of the respective first elastic component is connected to the respective pull rod, an other end of the respective first elastic component is connected to the respective handle swing arm, and the respective first elastic component is configured to provide stretchable elastic force for the respective pull rod.

9. The selfie device according to claim 8, wherein a respective anti-rotation structure configured to prevent the respective pull rod from rotating is disposed on each of the two transverse clamping arms.

10. The selfie device according to claim 9, wherein the respective anti-rotation structure comprises a respective guide component fixedly disposed on the respective pull rod in the respective handle swing arm.

11. The selfie device according to claim 10, wherein the respective handle swing arm comprises a respective transverse sliding groove; the one end of the respective pull rod is slidably disposed in the respective transverse sliding groove; and the respective guide component is a non-circular guide piece fixedly connected to the respective pull rod and is slidably matched with the respective transverse sliding groove.

12. The selfie device according to claims 1-11, wherein receiving grooves are disposed on the vertical arm, and the receiving grooves are configured to receive each of the two transverse clamping arms when each of the two transverse clamping arms is folded.

13. The selfie device according to claim 12, wherein notches are disposed on side walls of the receiving grooves, the notches are configured to facilitate to unfold the two transverse clamping arms.

14. The selfie device according to claim 1, wherein a decorative cover is further disposed on the vertical arm, and the decorative cover is configured to shield and hide a rotating shaft end of each of the two transverse clamping arms.

15. The selfie device according to claim 8, wherein a respective first anti-sliding groove is disposed on the at least one base, and a respective second anti-sliding groove is disposed in an inner side of the respective clamping head.

16. The selfie device according to claim 1, further comprising a hand-held anti-shake stabilizing device; wherein the hand-held anti-shake stabilizing device is disposed between the telescopic rod and the clamping device.

17. The selfie device according to claim 16, wherein the hand-held anti-shake stabilizing device comprises:
a bracket;
a transverse balance component;
an upper support; and
a lower support;
an upper adapter part is disposed on a top of the bracket, and a lower adapter part is disposed at a bottom of the bracket; the transverse balance component comprises a receiving member located in the bracket and an adapter rod connected with the receiving member and extending out of the bracket, a first groove having a smooth curved inner wall is disposed on an upper part of the receiving member, and a second groove is disposed on a lower part of the receiving member; the upper support is disposed on a top portion inside the bracket, a lower end of the upper support is spherical and is configured to abut against the first groove and is matched with an inner wall of the first groove; the lower support is disposed on a bottom portion inside the bracket, an elastic tapered protrusion, configured to abut against a bottom of the second groove, is disposed on a top end of the lower support; the clamping device is disposed on an upper part of the upper adapter part, and the telescopic rod is disposed at a lower part of the lower adapter part.

18. The selfie device according to claim 17, wherein the upper support comprises an installation base configured to be installed on the bracket and an upper ejector rod fixedly disposed on the installation base; a lower end of the upper ejector rod is a spherical surface.

19. The selfie device according to claim 17, wherein the lower support comprises an elastic lower ejector cap disposed at a lower portion inside the bracket and having the elastic tapered protrusion and further comprises a lower ejector rod configured to eject the elastic tapered protrusion to abut against the second groove from a lower end of the elastic lower ejector cap.

20. The selfie device according to claim 19, wherein a third groove is disposed on an upper part of the elastic lower ejector cap, and the third groove is matched with the lower part of the receiving member and is configured to limit an inclination degree of the receiving member.

21. The selfie device according to claim 19, wherein a blind hole is disposed on the lower end of the elastic lower ejector cap; the lower ejector rod is matched with the blind hole and is disposed in the blind hole in a penetrating mode, and the lower ejector rod abuts the elastic tapered protrusion against the second groove.

22. The selfie device according to claim 17, further comprising a transverse handle; wherein the transverse handle is hinged to one end of the adapter rod.

23. The selfie device according to claim 22, wherein an elastic self-locking structure is disposed between the adapter rod and the transverse handle, and the elastic self-locking structure is configured to automatically lock and fix the transverse handle when the transverse handle is unfolded or folded.

24. The selfie device according to claim 23, wherein the elastic self-locking structure comprises:
an accommodation groove;
an ejector rod;
a second elastic component; and
a plurality of limiting grooves;
wherein the accommodation groove is disposed on a hinged end of the transverse handle; the ejector rod is disposed inside the accommodation groove, and one end of the ejector rod extended out of the accommodation groove; the second elastic component abuts against the ejector rod and is configured to provide elastic force; and the plurality of the limiting grooves are disposed on a hinged end of the adapter rod and are configured to match with the ejector rod.

25. The selfie device according to claim 24, wherein a number of the plurality of the limiting grooves is two, and the two limiting grooves are respectively disposed on a front end and a lower end of the hinged end of the adapter rod.

26. The selfie device according to claim 22, further comprising a remote controller; wherein the remote controller is detachably disposed on the transverse handle.

27. The selfie device according to claim 26, wherein the remote controller is self-locked on the transverse handle through a first magnetic attraction assembly; the first magnetic attraction assembly is disposed on the remote controller and the transverse handle.

28. The selfie device according to claim 27, wherein the first magnetic attraction assembly comprises a first magnet disposed inside the transverse handle and a second magnet disposed inside the remote controller.

29. The selfie device according to claim 22, wherein when the transverse handle is folded, the transverse handle is self-locked on the longitudinal handle through a second magnetic attraction assembly, and the second magnetic attraction assembly is disposed in the transverse handle and the longitudinal handle.

30. The selfie device according to claim 29, wherein the second magnetic attraction assembly comprises a third magnet disposed inside the longitudinal handle and a fourth magnet disposed inside the transverse handle.

31. The selfie device according to claim 30, wherein the longitudinal handle is in a hollow structure; the longitudinal handle comprises a connection part and a cylindrical handle main body; the cylindrical handle main body is divided into a plurality of arc-shaped handle parts; a handle main body connection component is fixedly disposed on one end of the connection part; and the arc-shaped handle parts are hinged to the handle main body connection component.

32. The selfie device according to claim 31, wherein the third magnet is disposed inside the connection part.
